# Europäisches Patentamt
# European Patent Office
# Office européen des brevets

(19)

(11) Numéro de publication: **0 015 812**
**B1**

(12)

# FASCICULE DE BREVET EUROPEEN

(45) Date de publication du fascicule du brevet: **23.03.83**

(51) Int. Cl.³: **G 21 C 13/06,**
**G 21 C 13/02**

(21) Numéro de dépôt: **80400251.7**

(22) Date de dépôt: **22.02.80**

(54) **Dispositif de fermeture amovible et étanche d'un orifice d'une cuve de réacteur nucléaire.**

(30) Priorité: **07.03.79 FR 7905856**

(43) Date de publication de la demande:
**17.09.80 Bulletin 80/19**

(45) Mention de la délivrance du brevet:
**23.03.83 Bulletin 83/12**

(84) Etats contractants désignés:
**DE GB IT NL SE**

(56) Documents cités:
**DE - A - 1 151 414**
**DE - A - 2 707 916**
**FR - A - 1 337 362**
**FR - E - 88 180**

(73) Titulaire: **Framatome**
**Tour Fiat 1 place de la Coupole**
**F-92400 Courbevoie (FR)**

(72) Inventeur: **Marmorat, André**
**30 Rue des Martyrs**
**F-71200 Le Creusot (FR)**
Inventeur: **Montaron, René**
**14 rue des Capucines**
**F-71200 Le Creusot (FR)**

(74) Mandataire: **Bouget, Lucien et al,**
**CREUSOT-LOIRE 15 rue Pasquier**
**F-75383 Paris Cedex 08 (FR)**

Courier Press, Leamington Spa, England.

## Dispositif de fermeture amovible et étanche d'un orifice d'une cuve de réacteur nucléaire

L'invention concerne un dispositif de fermeture amovible et étanche de l'orifice d'une tubulure de raccordement du circuit primaire sur la cuve d'un réacteur nucléaire à eau sous pression, pendant l'épreuve de mise en pression hydraulique, alors que la cuve dont la construction est entièrement terminée en atelier n'a par encore été transportée sur le site du réacteur nucléaire et raccordée aux conduites de fluide de refroidissement ou fluide primaire.

Le cuve présente alors des orifices qui correspondent aux tubulures d'entrée et de sortie du fluide primaire auxquelles doivent se raccorder les conduites de fluide primaire.

Pour effectuer l'épreuve hydraulique, c'est-à-dire pour appliquer, à l'intérieur de la cuve, des pression élevées exercées par de l'eau sous pression remplissant la cuve, il est nécessaire d'obturer ces orifices avec des dispositifs résistant à de très fortes pressions.

En effet, dans le cas d'un réacteur nucléaire à eau sous pression, il est nécessaire d'appliquer un programme de pression généralement prévu par le cahier des charges pour vérifier la tenue du corps de la cuve, du couvercle et du goujonnage permettant la fermeture de ce couvercle, à des pressions voisines ou supérieures à la pression d'utilisation du réacteur.

Pour contrôler le comportement des différents organes de la cuve pendant l'épreuve hydraulique, il est nécessaire de disposer des organes de mesure et de contrôle tels que des jauges de contraintes à l'intérieur de la cuve et de faire sortir des fils d'instrumentation vers l'extérieur de la cuve pour enregistrer le résultat des mesures. Il est donc nécessaire de prévoir des passages étanches pour la sortie de ces fils d'instrumentation.

Il faut également prévoir des passages étanches pour l'alimentation de la cuve en eau sous pression nécessaire pour l'épreuve hydraulique.

Jusqu'ici les orifices de la cuve étaient obturés, avant épreuve hydraulique, à l'aide de fonds bombés soudés sur les tubulures.

Sur ces fonds bombés étaient également disposés les passages étanches de l'instrumentation et des passages étanches sur les adaptateurs de mécanismes permettaient l'alimentation en eau de la cuve.

L'utilisation de ces fonds bombés sur les tubulures de la cuve présente certains inconvénients car il faut prévoir sur les sorties de tubulure une surépaisseur de métal sur laquelle on vient souder le fond bombé, ces fonds étant, après épreuve hydraulique, découpés afin de les détacher des extrémités des tubulures.

Il faut ensuite avant livraison de la cuve à ses cotes définitives réusiner l'extrémité des tubulures comportant la surépaisseur de métal sur laquelle a été soudé le fond bombé pour permittre le raccord des tubulures aux conduites de fluide de refroidissement.

Toutes ces opérations successives présentent bien entendu des inconvénients tant en ce qui concerne le coût que la durée liés à ces opérations.

Le but de l'invention est donc de proposer un dispositif de fermeture amovible et étanche de l'orifice d'une tubulure de raccordement du circuit primaire sur la cuve d'un réacteur nucléaire à eau sous pression pendant l'épreuve de mise en pression avant raccordement des conduites de fluide primaire, ce dispositif devant permettre d'éviter des opérations de soudage et d'usinage sur la cuve avant et après l'épreuve hydraulique de cette cuve en atelier.

Dans ce but, le dispositif suivant l'invention comporte:

— un corps ou tampon constitué par au moins une virole cylindrique d'un diamètre inférieur au diamètre intérieur de la tubulure reliée à son extrémité destinée à venir à l'intérieur de la cuve à une pièce d'appui sur la partie interne de la cuve au voisinage de la tubulure et solidaire à sa partie située vers l'extérieur de la cuve d'un anneau porte-joints et d'un fond bombé réalisant une structure entièrement fermée vers l'extérieur de la cuve,

— un moyen réalisant d'étanchéité entre l'intérieur et l'extérieur de la cuve constitué par un ensemble de joints annulaires disposés lorsque le dispositif de fermeture est en position dans la tubulure, entre la surface externe de l'anneau porte-joints, an niveau d'un logement de joints, et la surface interne de la tubulure à son extrémité disposée vers l'extérieur de la cuve,

— et un organe de manoeuvre pour la fixation du dispositif constitué par une bride de serrage dont la fixation peut être réalisée sur l'anneau porte-joints et qui comporte des vis de serrage venant en appui sur l'extrémité de la tubulure à l'extérieur de la cuve exerçant un effort de traction sur la bride de serrage et sur le tampon de fermeture qui lui est relié.

Afin de bien faire comprendre l'invention on va décrire, à titre d'exemple non limitatif, en se référant aux figures jointes en annexe, un mode de réalisation d'un dispositif selon l'invention pour l'obturation d'une tubulure de raccordement au circuit primaire.

La figure 1 représente une demi-coupe par un plan vertical de symétrie d'un dispositif de fermeture suivant l'invention en position de service à l'intérieur d'une tubulure de sortie d'une cuve de réacteur nucléaire à eau pressurisée.

La figure 2 représente une vue suivant A de la figure 1.

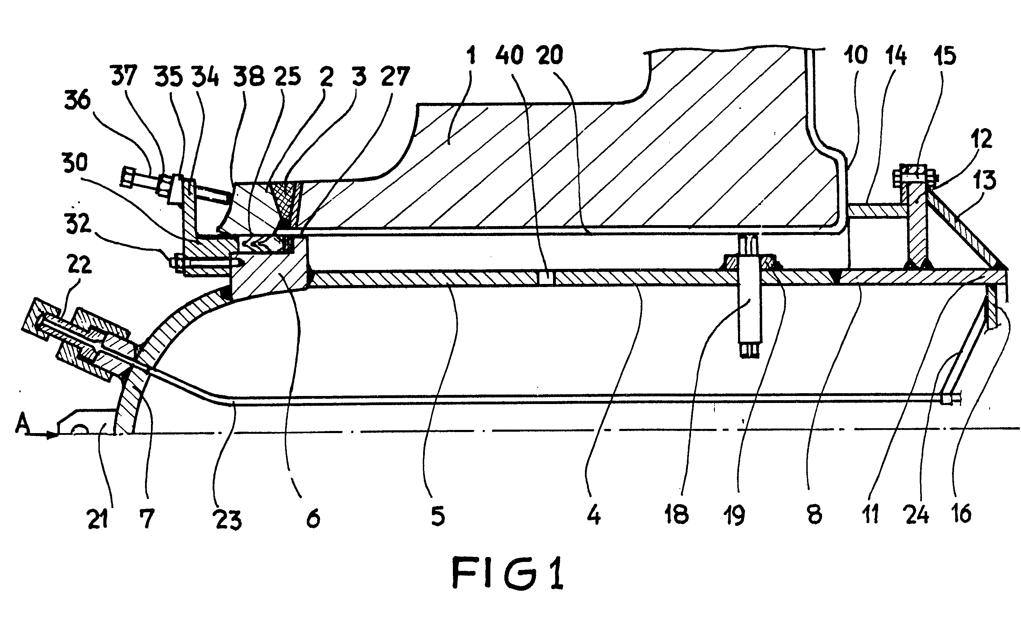

Sur la figure 1, on voit la tubulure 1 de sortie de la cuve d'un réacteur nucléaire à eau pressurisée à l'extrémité de laquelle est disposé un anneau 2 permettant le raccordement par soudage de la tubulure et de la tuyauterie primaire de sortie, lorsque la cuve est mise en place sur le site.

Cette bague de raccord est réunie au corps de la tubulure 1 par une zone de soudage 3 dont la résistance doit être testée également au moment de l'essai hydraulique.

A l'intérieur de la tubulure et au niveau de l'anneau de raccord 2 est mis en place un dispositif de fermeture suivant l'invention.

Ce dispositif de fermeture comporte un corps 4 constitué par une virole centrale 5 à l'extrémité avant de laquelle est fixée une bague porte-joint 6 elle-même reliée à un fond bombé 7.

A l'extrémité arrière du corps 4 est fixé par soudage un talon d'appui 8 permettant l'appui du dispositif de fermeture sur la p roi interne 10 de la cuve an niveau de la tubulure. Le talon d'appui 8 formant la partie arrière du dispositif de fermeture comporte une virole 11 réunie par soudage à la virole 5, un flasque 12 réuni également par soudage à la virole 11 et maintenu en place grâce à une structure d'appui 13 ainsi qu'une couronne d'appui 14 reliée au flasque 12 par l'intermédiaire de vis 15.

La virole cylindrique 11 est également réunie par soudage à un anneau de renfort 16 permettant de raidir la structure du dispositif de fermeture ou tampon et de fournir un support pour l'instrumentation.

Le tampon porte également au niveau de la virole médiane 5 des vis de centrage telles que 18, au nombre de 3 réparties à 120° sur la section de la virole et en appui sur la surface interne 20 de la tubulure. Ces trois vis 18 permettent, ainsi que nous le verrons dans le suite de la description, un centrage du tampon à l'intérieur de la tubulure au moment de sa mise en place.

Le fond bombé 7 constituant la partie du tampon venant se loger au niveau de l'extrémité externe de la tubulure porte un anneau de levage 21 et un passage étanche d'instrumentation 22 prolongé par un tube 23 maintenu à l'intérieur du tampon grâce à un support 24 solidaire de l'anneau de renfort 16.

Le tube 23 et le passage étanche 22 permettent la sortie de fils réunis à l'instrumentation interne à la cuve pendant les essais en pression hydraulique, par exemple les jauges de contraintes, pour la mesure des contraintes et déformation subies par les différentes parties de la cuve au cours de l'épreuve hydraulique.

L'anneau porte-joint 6 comporte un logement à sa partie externe à l'intérieur duquel on peut venir loger un ensemble de joints déformables 25 disposés lorsque le tampon est en place à l'intérieur de la tubulure, au niveau de l'anneau de soudage externe 2 de cette tubulure.

La partie arrière de l'anneau porte-joint 6, c'est-à-dire la partie située vers l'intérieur de la cuve, ménage entre la surface interne de la tubulure et sa propre surface externe un petit espace 27 permettant un passage de fluide sous presson jusqu'à la zone de joints qui se trouve elle-même à l'extérieur par rapport à la zone de soudure 3 de l'anneau de soudage sur la partie externe de la tubulure. De cette façon, il est possible de tester la zone de soudure 3 en pression au moment de l'épreuve hydraulique.

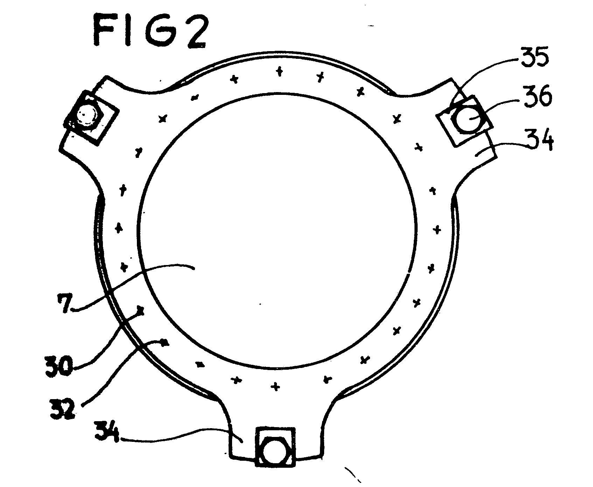

Lorsque le tampon est en place, comme représenté aux figures 1 et 2, la partie externe de l'anneau porte-joints 6 est reliée par un ensemble de goujons 32 à une bride de serrage 30 comportant, ainsi qu'il est visible sur la figure 2, une partie annulaire et trois pattes de serrage 34. Des cales de serrage 35 sont disposées au contact des pattes de serrage et taraudées de façon qu'une vis 36 munie d'un écrou 37 pour son blocage vienne en prise avec le taraudage de la cale 35 et en contact avec la face externe 38 de la tubulure 1 pour exercer une traction sur le tampon de fermeture de la tubulure appliquant la couronne d'appui 14 contre la surface interne de la cuve 10.

Le serrage puis le blocage des trois vis 36 disposées à la périphérie de la bride de serrage 30 permet donc le maintient en place du tampon à l'intérieur de la tubulure, en actionnant les vis depuis l'extérieur de la cuve.

Lorsque le tampon est mis en place dans la cuve avant l'essai hydraulique, le joint d'étanchéité n'est pas comprimé. L'étanchéité ne se réalise que lorsque l'eau sous pression est introduite dans la cuve et vient remplir l'espace compris entre le tampon et la surface interne de la tubulure, puis grâce au petit espace 27, la zone arrière de l'espace où se trouve le joint qui est ainsi comprimé par le fluide contre la bride de serrage 30, si bien qu'il se dilate radialement et vient fermer de façon étanche le logement de l'anneau porte-joint 6.

Le tampon comporte également des ouvertures 40 dans la virole 5 permettant l'introduction de l'eau sous pression à l'intérieur de l'espace entre la tubulure et le tampon pour permettre l'égalisation de la pression. Ces trous 40 servent également à la purge et à la vidange de l'expace compris entre le tampon et la paroi de la tubulure.

On va maintenant décrire une opération de mise en place d'un tampon de fermeture d'une tubulure de sortie d'eau primaire telle que représentée à la figure 1, avant l'essai hydraulique.

La cuve est installée sur des vireurs en position horizontale et la tubulure qu'on désire équiper d'un tampon de fermeture est positionnée grâce aux vireurs, à axe vertical, son extrémité extérieure étant disposée vers le haut.

Le tampon est équipé d'un anneau d'appui 14 adapté aux types d'orifices de la cuve et au type de cuve et disposé sur un chariot reposant sur des rails disposés suivant des génératrices de la cuve an position horizontale.

Les rails sont eux-mêmes montés sur des ensembles de roulettes en contact avec le revêtement intérieur de la cuve qui permettent d'orienter le chemin de roulement constitué par les rails sur lesquels repose le chariot porte-tampon de façon que le plan de roulement reste horizontal, lorsqu'on oriente la cuve grâce aux vireurs par rotation autour de son axe horizontal.

La voie de roulement est prolongée à l'intérieur de la cuve de façon suffisante pour amener le chariot avec le tampon de fermeture à la verticale de la tubulure à équiper.

On place alors au voisinage des tubulures, à l'extérieur de la cuve, une plateforme de travail permettant d'accéder à la partie supérieure de la cuve en position horizontale.

Le tampon disposé sur le chariot et amené à la verticale de la tubulure, à la différence de ce qui est représenté à la figure 1, ne comporte pas de bride de serrage 30 ni de joint 25 qui viendront l'équiper ultérieurement.

On utilise pour la mise en place du tampon deux palans à main fixés sur un crochet de pont roulant disposé à la verticale au-dessus de la tubulure de la cuve.

Dans le cas cuves de réacteurs nucléaires construts actuellement, il est nécessaire d'utiliser un tampon d'obturation dont le poids est approximativement de deux tonnes, aussi on disposera d'un palan d'une force de trois tonnes pour les manutentions de ce tampon à l'intérieur de la cuve.

Le palan d'une force de trois tonnes est relié au dispositif d'accrochage 21 du tampon et à l'aide de ce palan on remonte le tampon au contact de la tubulure, c'est-à-dire jusqu'au moment où l'anneau d'appui 14 vient en contact avec la surface interne 10 de la cuve au niveau de la tubulure. On maintient le tampon en place grâce au moyen de levage et on effectue un centrage de ce tampon à l'intérieur de la tubulure grâce aux trois vis 18 depuis l'intérieur de la cuve. Pour ces opérations de centrage du tampon grâce au vis 18, un opérateur se trouve nécessairement en dessous du tampon et pour des raisons de sécurité, il est alors souhaitable de monter temporairement des pattes auxiliaires sur l'anneau 6 du tampon pour éviter une chute pendant les opérations de réglage.

Grâce au second palan qui peut être par exemple un palan d'une force de 250 Kg on met les joints en place à l'intérieur du logement de l'anneau porte-joints 6 et la bride de serrage 30 sur l'anneau porte-joints 6 de façon que les trous de goujons 32 soient en concordance sur la bride de serrage et sur l'anneau porte-joint.

On effectue alors la fixation d'une pièce sur l'autre grâce aux goujons 32.

Le serrage et la fixation définitive du tampon dans la tubulure sont effectués par les vis 36 qui exercent une traction sur la bride de serrage 30 et sur le tampon qui lui est relié par l'intermédiaire ges goujons 32.

Lorsque ce serrage est réalisé, l'anneau d'appui 14 et l'extrémité des vis 36 réalisent la fixation du tampon à l'intérieur de la tubulure.

On peut alors dégager les palans qui ont servi à la mise en place du tampon et de la bride de serrage et dégager la plateforme de travail, pour faire effectuer à la cuve une rotation jusqu'à une nouvelle position permettant d'équiper une autre tubulure.

Lors de ces opérations, on veillera à équiper l'une à la suite de l'autre des tubulures opposées sur la cuve ce qui évite son déséquilibrage.

Lorsque toutes les tubulures sont équipés et que tous les autres orifices de la cuve ont été obturés il est possible d'introduire l'eau sous presson à l'intérieur de cette cuve pour effectuer l'essai hydraulique.

L'eau pénétrant dans l'espace entre le tampon et la tubulure puis auniveau de l'espace de l'anneau porte-joint où se trouvent les joints 25 grâce au passage 27, permet une dilatation radiale de ces joints qui assurent l'étanchéité alors que, lors de la mise en place, ces joints n'étaient pas dilatés et n'assuraient pas l'étanchéité.

Lorsque toute la pression hydraulique est établie à l'intérieur de la cuve, les efforts s'exerçant sur le tampon sont entièrement supportés par l'anneau d'appui 14, lui-même en contact avec la surface intérieure de la cuve au niveau de la tubulure.

De cette façon aucune pièce métallique à faible résistance n'intervient pour le maintien du tampon à l'intérieur de la tubulure pendant l'essai hydraulique.

Il est à noter que l'essai hydraulique se fait après transport de cette cuve au stand d'essai et mise en position verticale. Pendant ce transport et la mise en position verticale, l'ensemble du dispositif de fermeture est fixé sur la cuve et maintenu fermement en place grâce au dispositif de serrage constitué par la bride 30 et les vis 36.

Pour effectuer le démontage des dispositifs d'obturation, après épreuve hydraulique, on resplace la cuve sur le vireurs et l'on démonte successivement les tampons de chaque tubulure après les avoir reliés au palan de levage disposé à la verticale au-dessus de la tubulure.

Ce démontage est réalisé en desserrant les vis 36 puis en désolidarisant la bride 30 de l'anneau porte-joints 6 par dévissage des goujons 32.

On a décrit une opération de montage des tampons dans les tubulures, la cuve étant en position horizontale sur des vireurs mais il est également possible de mettre en place ces tampons, lorsque la cuve est en position verticale par exemple au stand d'essai.

On met alors en place le tampon grâce à un outillage en forme de C supporté par un palan qui soutient le tampon en position horizontale. Ce tampon en position horizontale étant disposé à l'aplomb et en face de la tubulure à équiper, on utilise à partir de la plateforme un outillage de traction qui permet de venir positionner le tampon au contact de la tubulure, l'anneau d'appui arrière venant en appui contre la surface interne de la cuve.

On comprend que les avantages principaux du dispositif suivant l'invention sont que ces dispositifs sont entièrement amovibles et extrêmement étanches et que leur résistance à la pression se fait par simple appui du corps du dispositif d'étanchéité massif sur une partie résistante de la paroi interne de la cuve ou sur un organe fixé rigidement sur la paroi interne de cette cuve.

D'autre part, le démontage du dispositif est extrêmement facile puisque les organes de manoeuvre permettant ce démontage sont disposés entièrement à l'extérieur de la cuve et facilement accessibles.

L'étanchéité est également assurée par des joints sur lesquels s'exerce la pression d'épreuve hydraulique, et qui a tendance à améliorer l'étanchéité lorsque cette pression d'épreuve augmente.

Enfin, il est bien évident qu'avec le dispositif suivant l'invention, on évite toutes les opérations de soudage et d'usinage des dispositifs de l'art antérieur et qu'ainsi on économise du temps et des coûts d'exécution pour la mise en oeuvre des essais sous pression hydraulique.

Mais l'invention ne se limite par aux modes de réalisation qui ont été décrits; elle en comprend toutes les variantes et l'on peur modifier des points de détail sans pour autant sortir du cadre de l'invention.

C'est ainsi que la mise en place du dispositif de fermeture peut être effectuée d'une façon différente de ce qui a été décrit soit avec la cuve en position horizontale, soit avec la cuve en position verticale.

De même la fixation de ce dispositif de fermeture avant mise en pression de la cuve peut être réalisée par des dispositifs différents de vis et d'écrous comme il a été décrit dans l'exemple de réalisation.

Enfin l'invention s'applique, à chaque fois qu'on désire obturer les orifices des tubulures d'une cuve de réacteur nucléaire pour effectuer une épreuve par mise en pression hydraulique de l'intérieur de la cuve, avant mise en service de cette cuve et raccordement des conduites de fluide de refroidissement sur les tubulures correspondantes, quelles que soient la dimension et la forme de ces tubulures, la pièce d'appui réalisée sous forme amovible pouvant être adaptée aisément suivant le type de tubulures.

## Revendications

1. Dispositif de fermeture amovible et étanche de l'orifice d'une tubulure de raccordement (1) du circuit primaire sur la cuve d'un réacteur nucléaire à eau sous pression pendant l'épreuve de mise en pression avant raccordement des conduites de fluide primaire, caractérisé par le fait qu'il comporte:

— un corps (4) ou tampon constitué par au moins une virole cylindrique (5) d'un diamètre inférieur au diamètre intérieur de la tubulure reliée à son extrémité destinée à venir à l'intérieur de la cuve à une pièce d'appui (8) sur la partie interne (10) de la cuve au voisinage de la tubulure (1) et solidaire à sa partie située vers l'extérieur de la cuve d'un anneau porte-joints (6) et d'un fond bombé (7) réalisant une structure entièrement fermée vers l'extérieur de la cuve,

— un moyen réalisant l'étanchéité entre l'intérieur et l'extérieur de la cuve constitué par un ensemble de joints annulaires (25) disposés lorsque le dispositif de fermeture est en position dans la tubulure, entre la surface externe de l'anneau porte-joints (6), au niveau d'un logement de joints, et la surface interne (20) de la tubulure (1) à son extrémité disposée vers l'extérieur de la cuve,

— et un organe de manoeuvre pour la fixation du dispositif constitué par une bride de serrage (30) dont la fixation peut être réalisée sur l'anneau porte-joints (6) et qui comporte des vis de serrage (36) venant en appui sur l'extrémité (38) de la tubulure à l'extérieur de la cuve exerçant un effort de traction sur la bride de serrage (30) et sur le tampon de fermeture qui lui est relié.

2. Dispositif de fermeture suivant la revendication 1, caractérisé par le fait que le fond bombé (7) est relié à un dispositif d'accrochage (21) pour la manutention du tampon de fermeture (4).

3. Dispositif de fermeture suivant l'une quelconque des revendications 1 et 2, caractérisé par le fait que la pièce d'appui (8) disposée à la partie arrière du tampon d'obturation est amovible par rapport au corps (4) de ce dispositif d'obturation pour son adaptation à des dimensions et à des formes de cuves différentes.

4. Dispositif de fermeture suivant l'une quelconque des revendications 1, 2 et 3, caractérisé par le fait que des vis de centrage (18) du tampon de fermeture (4) à l'intérieur de l'orifice (20) de la tubulure (1) sont disposées radialement sur la virole (5) constituant le corps du tampon de fermeture.

## Patentansprüche

1. Abnehmbare und abdichtende Verschließvorrichtung der Öffnung eines Primärkreisanschlußstutzens (1) an einem Druckwasserkernreaktorbehälter während der Druckwasserprobe vor dem Anschluß der Primärwasserleitungen, dadurch gekennzeichnet, daß sie umfaßt:

— ein Gehäuse oder Stopfen (4), der mindestens aus einem zylinderförmigen Mantel (5) mit einem kleineren Durchmesser als der Stutzeninnendurchmesser besteht, an seinem in das Behälterinnere eindringende Ende mit einer an dem Behälterinnenteil (10) in der Nähe des Stutzens (1) angeordneten Abstützung (8) verbunden ist und an seinem nach der Behälteraussenseite hin gelegenen Teil mit einem Dichtungstragring (6) und einem gewölbten Boden (7) fest verbunden ist, wodurch eine nach der Behälteraussenseite hin vollständig verschlossene Konstruktion gebildet wird,

— ein Mittel zur Herstellung der Abdichtung zwischen der Behälterinnen- und -aussenseite bestehend aus einem Satz Dichtungsringe (25), die zwischen der Außenfläche des Dichtungstragringes (6) in der Höhe eines Dichtungsringsitzes und der Innenfläche (20) des Stutzens (1) an seinem zur Behälteraussenseite hin liegenden Ende angeordnet sind, wenn die Verschließvorrichtung in dem Stutzen aufgenommen ist,

— sowie ein Betätigungselement zur Befestigung der Vorrichtung bestehend aus einem Befestigungsflansch (30), dessen Befestigung an dem Dichtungstragring (6) hergestellt werden kann und welcher Befestigungsschrauben (36) aufweist, die an dem Stutzenende (38) an der Behälteraussenseite zur Auflage kommen und somit auf den Befestigungsflansch (30) und auf den mit diesem verbundenen Verschlußstopfen eine Zugkraft ausüben.

2. Verschließvorrichtung nach Anspruch 1, dadurch gekennzeichnet, daß der gewölbte Boden (7) mit einer Einhängeeinrichtung (21) zum Heben des Verschließstopfens (4) verbunden ist.

3. Verschließvorrichtung nach einem der Ansprüche 1 und 2, dadurch gekennzeichnet, daß zu deren Anpassung an unterschiedliche Behälterabmessungen und -formen die an dem hinteren Verschließstopfenteil angeordnete Abstützung (8) gegenüber dem Gehäuse (4) dieser Verschließvorrichtung abnehmbar ist.

4. Verschließvorrichtung nach einem der Ansprüche 1, 2 und 3, dadurch gekennzeichnet, daß die Zentrierschrauben (18) des Verschließstopfens (4) im Inneren der Öffnung (20) des Stopfens (1) aus dem das Verschließstopfengehäuse bildenden Mantel (5) radial angeordnet sind.

**Claims**

1. Detachable and leaktight closing device for the orifice of a tube (1) for connecting the primary circuit to the vessel of a pressurised water nuclear reactor, during the pressurising test, before connection of the primary fluid pipes, characterised in that it comprises:

— a body (4), a plug, consisting of at least one cylindrical shell (5) having a diameter smaller than the internal diameter of the tube, which is joined, at its end intended to enter inside the vessel, to a bearing part (8) on the internal part (10) of the vessel, in the region of the tube (1), and which is firmly fixed, at its part located towards the outside of the vessel, to a gasket-holding ring (6) and to a curved end (7), producing an entirely closed structure towards the outside of the vessel,

— a means creating a seal between the inside and outside of the vessel and consisting of a set of annular gaskets (25) which, when the closing device is in position in the tube, are arranged between the external surface of the gasket-holding ring (6) at the location of a gasket housing, and the internal surface (20) of the tube (1), at its end located towards the outside of the vessel, and

— a control member for fixing the device, which consists of a clamp (30) which can be fixed to the gasket-holding ring (6) and which comprises clamping screws (36) bearing on the end (38) of the tube, on the outside of the vessel, exerting a traction force on the clamp (30) and on the closing plug which is joined thereto.

2. Closing device according to Claim 1, characterised in that the curved end (7) is joined to a hooking device (21) for handling the closing plug (4).

3. Closing device according to either one of Claims 1 and 2, characterised in that the bearing part (8) arranged in the rear part of the shut-off plug is detachable relative to the body (4) of this shut-off device, so that it can be adapted to suit different demensions and different vessel shapes.

4. Closing device according to any one of Claims 1, 2 and 3, characterised in that screws (18) for centering the closing plug (4) inside the orifice (20) of the tube (1) are arranged radially on the shell (5) forming the body of the closing plug.

37 35 34 38 25 2 3 27

36

30

32

22

1 40 20

10 14 15

12

13

0015812

A

21 7 23 6 5 4 18 19 8 11 24 16

FIG 1

FIG 2

35

36

34

7

30

32

34